# EUROPÄISCHE PATENTSCHRIFT

(11) **EP 2 154 826 B1**
(45) Veröffentlichungstag und Bekanntmachung des Hinweises auf die Patenterteilung: **19.12.2012**
(21) Anmeldenummer: 08075696.8
(22) Anmeldetag: 11.08.2008
(51) Int. Cl.: H04L 29/08, H04L 12/24

(54) **Verfahren zur Bereitstellung von Diensten in einer telekommunikativen Netzinfrastruktur**
Method for providing services in a telecommunication network infrastructure
Procédé de mise à disposition de services dans une infrastructure de réseau de télécommunication

(43) Veröffentlichungstag der Anmeldung: 17.02.2010
(73) Patentinhaber: Deutsche Telekom AG, 53113 Bonn (DE)
(72) Erfinder: Burkhardt, Frank, 12159 Berlin (DE); Grothe, Andreas, 10785 Berlin (DE); Staiger, Ullrich, 14193 Berlin (DE); Lehmann, Bettina, 14612 Falkensee (DE)
(74) Vertreter: Drosch, Ulrich

(56) Entgegenhaltungen:
- WO-A-00/14977
- WO-A-99/20059
- WO-A-2008/033453
- US-A1- 2002 178 252

## Beschreibung

Die Erfindung betrifft ein Verfahren, welches es ermöglicht, Dienste, die in einer telekommunikativen Netzinfrastruktur nutzbar sind, durch eine computergestützte Administration auszuwählen und für die Nutzung miteinander zu kombinieren. Das Verfahren ermöglicht es, einem Nutzer oder vorzugsweise einer Nutzergruppe die Dienste unterschiedlicher Anbieter nach im Zuge der Administration festgelegten Vorgaben zur Verfügung zu stellen, wobei die Dienste gegebenenfalls auch Bestandteile einer heterogenen Netzinfrastruktur sind, also in unterschiedlichen Netzen angeboten und unter Nutzung des Verfahrens zusammengeführt werden. Bei den unter Nutzung des Verfahrens bereitgestellten Diensten kann es sich sowohl um reine Telekommunikative Dienste wie Telefon oder Fax handeln, aber insbesondere auch um mediale Dienste, die unter Nutzung einer Netzinfrastruktur erbracht werden.

Beschränkten sich die über die Infrastruktur telekommunikativer Netze erbrachten Dienste im althergebrachten Telefonfestnetz früher auf die so genannten POTS (Plain Old Telefon Services), nämlich die Sprachtelefonie und die Faxübertragung, sind durch die Entwicklung der Mobilfunktelefonie und insbesondere durch den rasanten Ausbau des Internet in den letzten Jahren eine Vielzahl von Diensten hinzugetreten. Nur beispielhaft seien hier der SMS-Dienst im Mobilfunk und das E-Mailing oder Streaming-Anwendungen im Internet genannt. Abgesehen davon, dass zum Beispiel der SMS-Versand zwischenzeitlich auch für das Festnetz verfügbar gemacht wurde, ist dabei die Tendenz zu verzeichnen, den Zugriff auf die in einem Netzwerk, wie beispielsweise dem Mobilfunknetz, zur Verfügung gestellten Dienste auch aus anderen Netzwerken zu ermöglichen. Dies wiederum fördert die Tendenz, die Möglichkeiten einzelner Dienste auch über Netzwerkgrenzen hinweg miteinander kombinierbar zu machen. In diesem Zusammenhang ist es insbesondere für organisatorische Gruppen, wie beispielsweise Firmenarbeitsgruppen oder andere, nicht der gewerblichen Wirtschaft angehörende Nutzergruppen, häufig von Interesse, im Rahmen gruppenintemer Abläufe ihren Mitgliedern Dienste der vorgenannten Art unter festgelegten Bedingungen zur Verfügung zu stellen und sie, bezogen auf diese Abläufe, in sinnvoller Weise miteinander zu kombinieren. Zur Administration einer solchen gruppenbezogenen Dienstnutzung muss sich ein jeweiliger Administrator bisher an die entsprechenden, einen jeweiligen Dienst zur Verfügung stellenden Provider wenden. Eine providerunabhängige Kombination einzelner Dienste erfordert von ihm zudem relativ genaue Kenntnisse der technischen Spezifikationen der jeweiligen Dienste. Das Einrichten einer telekommunikativen Umgebung zur kombinierten Nutzung unterschiedlicher Dienste ist insoweit mit einem beträchtlichen administrativen Aufwand für ihn verbunden. Entsprechendes gilt natürlich auch für den Einzelnutzer der unterschiedliche Dienste intensiver nutzt und diese dabei gegebenenfalls auch in sinnvoller Weise kombinieren möchte. Das Verfahren ist insoweit vorzugsweise für die Nutzung durch Nutzergruppen vorgesehen, hierauf aber nicht beschränkt.

Durch die WO 2000/014977 A1 sind ein System und ein Verfahren zur Schaffung von telekommunikativen Diensten bekannt geworden. Ein wesentlicher Bestandteil der in dieser Druckschrift beschriebenen Lösung ist ein computerbasiertes Benutzer-Interface, über welches Mitarbeiter eines Serviceproviders zur Erstellung entsprechender telekommunikativer Dienste Zugriff auf eine Objektbibliothek mit dienstunabhängigen universellen Grundbausteinen haben, welche mittels Software-Stammfunktion realisiert sind. Die genannten Grundbausteine werden einem entsprechenden Mitarbeiter in Form von textuellen Beschreibungen unter Angabe mit der jeweiligen Stammfunktion assoziierten Parametern präsentiert, wobei die Parameter gegebenenfalls durch den Benutzer veränderbar sind. Das Ergebnis der Zusammenstellung und Modifizierung der Grundbausteine, nämlich ein entsprechender neugeschaffener Dienst, wird dem Benutzer beziehungsweise Mitarbeiter des Serviceproviders durch das System in Form eines Ablaufschemas visualisiert.

Das in der WO 2000/014977 A1 beschriebene System dient der Unterstützung der Mitarbeiter von Serviceprovidern, ermöglicht es aber nicht den Nutzern einer von Serviceprovidern zur Verfügung gestellten telekommunikativen Netzinfrastruktur Dienste dieser Infrastruktur in der Weise zur Verfügung zu stellen, dass diese die Dienste selbst gezielt auszuwählen, an die eigenen Bedürfnisse anpassen und sie gegebenenfalls mit anderen Diensten kombinieren können.

Aufgabe der vorliegenden Erfindung ist es, ein Verfahren anzugeben, welches es ermöglicht, den Nutzern einer telekommunikativen Netzinfrastruktur, die in dieser Struktur nutzbaren Dienste in komfortabler Weise zur Verfügung zu stellen, so dass es ihnen ermöglicht ist, diese Dienste im Wege einer computergestützten Administration auszuwählen und miteinander zu kombinieren.

Die Aufgabe wird durch ein Verfahren mit den Merkmalen des Hauptanspruchs gelöst. Vorteilhafte Aus- beziehungsweise Weiterbildungen der Erfindung sind durch die Unteransprüche gegeben.

Nach dem vorgeschlagenen Verfahren erfolgt die Bereitstellung von in einer telekommunikativen Netzinfrastruktur nutzbaren Diensten, das heißt ihre Auswahl und das Kombinieren der Dienste, im Wege einer computergestützten Administration mit Hilfe einer grafischen Arbeits- beziehungsweise Benutzeroberfläche. Hierzu werden zunächst alle auswählbaren Dienste auf ein ihre jeweilige technische Spezifikation beschreibendes Datenobjekt abgebildet.

Jedes einen Dienst abbildende Datenobjekt wird in einer Datenbank abgelegt, welche auf einem oder, verteilt, auf mehreren zu der Netzinfrastruktur gehörenden Servern gehalten wird. Mittels eines zur Administration benutzten, ebenfalls in die Netzinfrastruktur einbezogenen Endgeräts, vorzugsweise eines PCs mit Internetzugang, der Zugriff auf die vorgenannte Datenbank hat, können die Dienste mit Hilfe einer mit diesem Endgerät bedienbaren Administrationssoftware von einem Administrator ausgewählt werden. Ein von dem Administrator ausgewählter Dienst wird an einem Display des von ihm zur Administration verwendeten Endgeräts als eine auf dem Display frei positionierbare grafische Box visualisiert. Dabei weist jede einen ausgewählten Dienst repräsentierende Box zumindest eine den Dienst bezeichnende Überschrift auf und enthält darüber hinaus eine textuelle Kurzbeschreibung des betreffenden Dienstes. Ferner ist an jeder einen ausgewählten Dienst repräsentierenden Box mindestens ein einen Eingang oder einen Ausgang des Dienstes repräsentierender Port symbolisiert. Die vorgenannten Ports werden dabei entsprechend den von ihnen jeweils abgebildeten physikalischen Typen der Datenports der Dienste in unterschiedlicher Weise visualisiert. Zur Verknüpfung von Diensten sind die Ports der sie repräsentierenden Boxen von dem Administrator mit Hilfe eines entsprechenden Eingabegerätes, vorzugsweise der Maus eines Computers, miteinander verbindbar. Die Verbindung erfolgt durch das Ziehen von Linien zwischen den Ports. Hierbei ist das Verfahren so gestaltet, dass die Dienste untereinander nur entsprechend sich aus ihren Spezifikationen ergebenden und zumindest die Typen ihrer Datenports berücksichtigenden Vorgaben miteinander verbindbar sind. Diese Spezifikationen beziehungsweise die Typen der Datenports sind jeweils in den Datenobjekten, auf welche die Dienste abgebildet sind, durch entsprechende Datenstrukturen und Werte beschrieben. Wie bereites dargelegt sind in diesem Zusammenhang unterschiedliche Datenports, welche demzufolge unterschiedlich als Bestandteil eines Datenobjekts abgebildet sind, auf der Benutzeroberfläche in unterschiedlicher Weise visualisiert. Nach dem Abschluss des Administrationsvorgangs wird der die Verknüpfung der Dienste darstellende Graph aus den Boxen und den ihre Ports verbindenden Linien durch soft- und hardwarebasierte, zur Netzinfrastruktur gehörende Einheiten in technische Parameter umgesetzt und in Einheiten zur Dienststeuerung nutzerbezogen oder nutzergruppenbezogen abgelegt. Durch die vorgenannten Parameter wird die Art und Weise des Ablaufs der ausgewählten Dienste und ihres Zusammenwirkens bei der Nutzung, das heißt zur Laufzeit bestimmt. Die die Ports verbindenden Linien des Graphen werden dabei in eine leitungs- oder paketvermittelte Verbindung für den Datenaustausch zwischen den Diensten umgesetzt.

Die in den Einheiten zur Dienststeuerung abgelegten technischen Parameter werden zur Laufzeit der Dienste auf einer Ausführungsebene in interpretativer Weise in Signale umgesetzt, welche die Dienste auf physikalischer Ebene steuern.

Entsprechend einer vorteilhaften Ausführungsform ist das erfindungsgemäße Verfahren so ausgebildet, dass die Visualisierung der die Dienste abbildenden Datenobjekte und ihrer bei der Administration erfolgenden Verknüpfungen, das heißt die Visualisierung des die Art und Weise der Kombination von Diensten darstellenden Graphs, mit Hilfe einer browserbasierten grafischen Benutzeroberfläche der Administrationssoftware erfolgt. Vorzugsweise ist auch die Administrationssoftware als solches webbasiert angelegt. Das heißt, der Nutzer der Software greift mittels eines Clients, also eines Webbrowsers bekannter Art, auf die Software zu, welche auf einem Server (oder gegebenenfalls auch mehreren Servern) gehalten wird. Der betreffende Server ermöglicht dabei, den Zugang zu Bedienfunktionen der Software über eine Website, auf welcher auch die von der Software im Ergebnis ihrer Bedienung auszugebenden Informationen darstellt werden. Gegebenenfalls kann ein für den Zugriff auf diese Internetseite genutzter, auf dem für die Administration verwendeten Endgerät laufender Browser üblicher Ausbildung um spezielle Plug-Ins zur Bedienung der Software ergänzt sein. Auch ist es denkbar, dass Teile der insgesamt webbasiert arbeitenden Software in Form von Applets auf dem Endgerät, vorzugsweise einem PC, ablaufen, mittels welchem über den Browser auf die Internetseite zugegriffen wird.

Die Visualisierung der die Dienste abbildenden Datenobjekte erfolgt vorzugsweise mit Boxen, deren Inhalt editierbar ist. Je nach Dienst kann eine entsprechende, editierbare Box auch ein Konfigurationsmenü umfassen, in welchem bestimmte Dienstparameter, wie beispielsweise Zeiten für die Ausführung des Dienstes, von dem Dienst zu nutzende Datengrundlagen oder von ihm für die Ausgabe von Informationen zu verwendende Übertragungsmedien, durch den Benutzer unter Verwendung von Drop-Down-Menüs oder über Tastatureingaben einstellbar sind. Vorzugsweise ist ein entsprechendes Konfigurationsmenü so gestaltet, dass bei dessen Aufruf bestimmte sinnvolle Werte für die einzelnen Konfigurationsparameter als Default-Werte bereits vorgegeben sind. Ein entsprechendes Konfigurationsmenü kann beispielsweise über einen Reiter eines in dem Fenster beziehungsweise der Box dargestellten karteikartenähnlichen Steuerelements aufgerufen werden.

Entsprechend einer möglichen Ausbildungsform des erfindungsgemäßen Verfahrens können einzelne alternativ nutzbare und insofern im Grunde gleichberechtigt nebeneinander stehende Dienste zumindest bei ihrer Visualisierung auch zu Gruppen zusammengefasst werden. So ist es denkbar, Dienste, wie beispielsweise den SMS-Dienst und das E-Mailing, in einer Gruppe zu Messaging-Diensten zusammenzufassen, wobei die zugehörige, diese Dienstegruppe visualisierende Box ein Konfigurationsmenü umfasst, in welchem der im Einzelfalle tatsächlich zu verwendende Dienst (SMS oder E-Mail) auswählbar ist. Darüber hinaus werden in Weiterbildung des Verfahrens so genannte Grunddienste bereitgestellt, deren sie visualisierende Boxen von einer die Administrationssoftware nutzenden Person mit einem Content befüllbar sind, über die Netzinfrastruktur mit Hilfe anderer Dienste übertragen wird. So kann der Administrator beispielsweise eine Textbox in den Graphen einbeziehen und mit ihrer Hilfe eine in der Box hinterlegte Textnachricht mittels der Dienste SMS oder E-Mail versenden.

Die an den Boxen symbolisierten Ports visualisieren diejenigen Teile des einen jeweiligen Dienst beschreibenden Datenobjekts, welche die hardwaremäßige Ausbildung der physikalischen Datenports des Dienstes und die zur Kommunikation über diese Datenports eingesetzten Protokolle beschreiben. Die eingangs erwähnte unterschiedliche Visualisierung, durch welche unterschiedliche physikalische Typen von Datenports repräsentiert werden, kann beispielsweise durch die Verwendung unterschiedlicher Farben für die vorzugsweise an den Rändern der Boxen symbolisierten Ports realisiert werden. Außerdem oder alternativ können die Ports auch in unterschiedlichen geometrischen Formen dargestellt werden. Vorzugweise ist die grafische Oberfläche dabei so gestaltet, dass ein aktivierter Port, beispielsweise durch Blinken oder einen ihn umrandenden Kreis oder Halbkreis, signalisiert wird. Die Aktivierung des Ports erfolgt durch Anklicken, nach welchem dann die Verbindung des betreffenden Ports mit einem anderen Port ermöglicht ist.

Das erfindungsgemäße Verfahren ist vorteilhaft dadurch weitergebildet, dass die zur Visualisierung der Dienste und ihrer Kombination dienende grafische Benutzeroberfläche ein kontextsensitives Hilfemenü umfasst.

Die Erfindung soll nachfolgend anhand eines Ausführungsbeispiels nochmals näher erläutert werden. In den zugehörigen Zeichnungen zeigen:
- Fig. 1:: ein Schema zur Erläuterung einer möglichen Ausbildungsform des Verfahrens,
- Fig. 2:: mehrere durch Visualisierung ihrer Datenobjekt symbolisierte Dienste einer telekommunikativen Infrastruktur,
- Fig. 3:: eine mögliche Verknüpfung der Dienste gemäß Fig. 2.

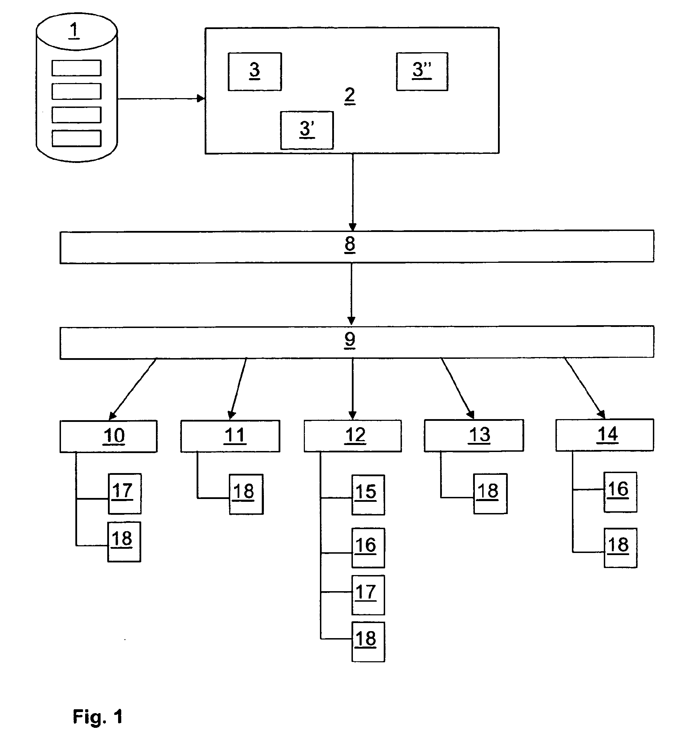

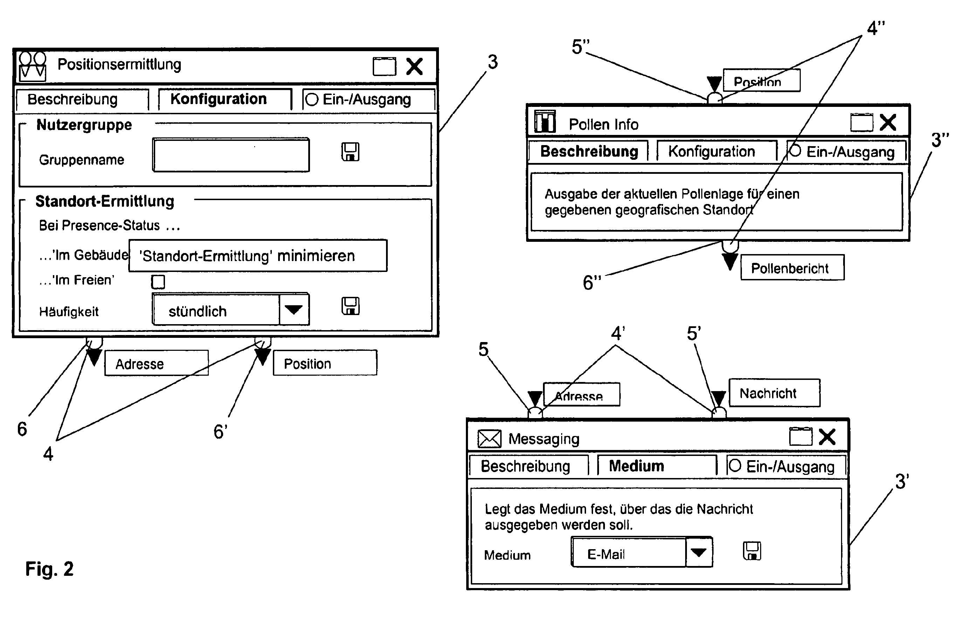

Die Fig. 1 zeigt ein Schema, welches der Erläuterung einer möglichen Ausbildungsform des erfindungsgemäßen Verfahrens dienen soll. In dem Schema werden nach Art eines Blockschaltbilds die in das Verfahren einbezogenen Einheiten einer Netzinfrastruktur und deren Interaktion im Rahmen des erfindungsgemäßen Verfahrens symbolhaft dargestellt. Danach erfolgt die computergestützte Administration, das heißt die Auswahl von in der Netzinfrastruktur zur Verfügung stehenden Diensten und ihre Kombination miteinander mit Hilfe eines netzwerkfähigen Endgeräts, welches über ein Display 2 zur Darstellung der bei der Durchführung des Verfahrens verwendeten grafischen Benutzeroberfläche verfügt. Mittels dieses Endgeräts ist der Zugriff auf eine oder mehrere von Einheiten der Netzinfrastruktur gehaltene Datenbanken 1 ermöglicht, in welchen die zur Verfügung stehenden Dienste in Form sie beschreibender Datenobjekte abgelegt sind. Die Erstellung verfahrensgemäßer Datenobjekte und ihre Ablage können dabei beispielsweise im Rahmen einer vorgegebenen Syntax durch die Provider erfolgen, welche die Dienste bereitstellen. Über das Menü einer vorzugsweise browserbasierten Administrationssoftware ist der Zugriff auf die in der oder den Datenbanken 1 zu den Diensten abgelegten Datenobjekte gegeben. Ein ausgewählter Dienst wird von einem Nutzer des Endgeräts aus einer die verfügbaren Dienste textlich oder in graphischer Darstellung auflistenden Bibliothek in einen dafür vorgesehenen Arbeitsbereich der grafischen Benutzeroberfläche mittels einer Maus gezogen. Im Arbeitsbereich wird der entsprechende Dienst durch eine frei positionierbare Box 3, 3', 3" visualisiert. Die Box 3, 3', 3" umfasst (siehe hierzu auch Fig. 2) eine den Dienst bezeichnende Überschrift, eine kurze Beschreibung des Dienstes und gegebenenfalls einen Menüpunkt zu seiner Konfiguration. Ferner sind an der Box 3, 3', 3" Ports 4, 4', 4" symbolisiert, welche die physikalischen Datenports des jeweiligen Dienstes, das heißt seine Eingänge 5, 5', 5" und Ausgänge 6, 6', 6", abbilden.

Die Dienste können nun auf dem Display 2 beziehungsweise im Arbeitsbereich der Benutzeroberfläche in einer im Hinblick auf ihre vorgesehene Kombination zueinander günstigen Anordnung positioniert und gegebenenfalls durch eine Tastatureingabe oder die Auswahl von Parametern aus entsprechenden Menüs mittels der Maus konfiguriert werden. Mittels eines Zeigereingabegerätes, wie der Maus, werden die Eingänge 5, 5', 5' und Ausgänge 6, 6', 6" der Dienste miteinander verbunden. Dabei ist das Verfahren so ausgestaltet, dass nur die Ports 4, 4', 4" solcher Dienste untereinander verbindbar sind, welche auf der technischen Ebene entsprechend ihrer technischen Spezifikationen, insbesondere entsprechend des Typs ihrer Datenports, tatsächlich miteinander verbindbar sind. Die Verbindung erfolgt durch Aktivierung eines jeweiligen Ports 4, 4', 4" durch Anklicken mit der Maus und das Ziehen einer Linie 7, 7', 7" zum Port 4, 4', 4" eines anderen Dienstes. Im Zuge dieser administrativen Bedienung entsteht schließlich ein Graph, dessen Knoten durch die die Datenobjekte der Dienste visualisierenden Boxen 3, 3', 3" gebildet sind und dessen die Boxen miteinander verbindenden Linien 7, 7', 7" jeweils einen zur Laufzeit erfolgenden leitungs- oder paketvermittelten Datenaustausch zwischen den Diensten symbolisieren. Dieser Graph wird nach dem Abschluss des Administrationsvorgangs durch eine Umsetzungskomponente 8, bei welcher es sich um eine durch Einheiten der Netzinfrastruktur realisierte soft- und hardwarebasierte Instanz handelt, zunächst in eine maschinenlesbare Form überführt. Die hierin enthaltenen Parameter zur Steuerung der jeweiligen Dienste, das heißt zur Steuerung der Art und Weise ihres Ablaufs und der Interaktion miteinander, werden in entsprechenden, zur Dienststeuerung ausgebildeten Einheiten der Netzinfrastruktur abgelegt. Hier werden sie dann zur jeweiligen Laufzeit der Dienste auf einer die auszuführenden Instanzen der Dienste umfassenden Ausführungsebene 9 in interpretativer Weise in Signale umgesetzt, welche die Dienste auf physikalischer Ebene steuern.

Das Schema der Fig. 1 veranschaulicht eine heterogene Netzinfrastruktur, in welcher Netzwerke unterschiedlicher Art, nämlich das Leitungsnetz der Festnetztelefonie (POTS-Netz), das Internet und Mobilfunknetze über Gateways, im Beispiel ein Voice Gateway 12, ein E-Mail Gateway 11, ein SMS Gateway 10, einen Streaming Server 13 und ein SIP Gateway 14 für Voice over IP (VoIP), zusammengeführt sind. Die entsprechenden Gateways 10 - 14 realisieren dabei zum einen die physikalischen Netzübergänge, aber auch Schnittstellen zur Konvertierung der unterschiedlichen, durch die verschiedenen Dienste verwendeten Übertragungsprotokolle. Die Dienste sind dann über die Gateways 10 - 14 jeweils mittels geeigneter Endgeräte, wie zum Beispiel eines POTS-Telefons 15, eines IP-Telefons 16, eines 2G/3G Mobiltelefons 17 oder eines IMS-fähigen Endgeräts 18 (IMS = IP Multimedia Subsystem) nutzbar.

In der Fig. 2 ist beispielhaft die Art und Weise der Visualisierung mehrerer Dienste beziehungsweise der diese Dienste abbildenden Datenobjekte gezeigt. Die Datenobjekte, welche die Dienste abbilden, werden, wie ersichtlich, durch Boxen 3, 3', 3" visualisiert, welche zumindest eine den jeweiligen Dienst beschreibende Überschrift aufweisen und eine Kurzbeschreibung des Dienstes enthalten. In einem Rahmen der Box 3, 3', 3" beziehungsweise des Fensters ist der durch diese Box 3, 3', 3" symbolisierte Dienst bezeichnet. In einem darunter befindlichen Textkörper ist eine Kurzbeschreibung des Dienstes gegeben. In dem gezeigten Beispiel wurden ein Dienst zur Positionsbestimmung, symbolisiert durch Box 3, ein Dienst zur Ausgabe einer Information über die Pollenbelastung, symbolisiert durch die Box 3" und ein Messaging-Dienst, symbolisiert durch die Box 3', ausgewählt.

Durch den Dienst zur Polleninformation (Box 3") wird eine territorial bezogene Information über die Belastung der Luft mit allergen wirkenden Pflanzenpollen zum Abruf bereitgestellt.

Der Dienst zur Positionsbestimmung verfügt gemäß dem Beispiel über zwei Ausgänge 6, 6'. Ferner ist für den Dienst eine Konfigurationsmöglichkeit für einen Nutzer der Administrationssoftware gegeben. In dem gezeigten Beispiel verfügt die entsprechende Box 3 über drei Karteireiter, über welche unterschiedliche Angaben zum Dienst angesprochen und gegebenenfalls editiert werden können. Gemäß der Beschriftung der Reiter können bei entsprechender Auswahl eine Kurzbeschreibung des Dienstes eingesehen, der Dienst konfiguriert sowie Angaben zu seinen Ausgängen 6, 6' eingesehen werden. In der Darstellung ist der Reiter "Konfiguration" aktiviert, so dass in der dementsprechend ausgewählten Seite der Box 3 Eingaben zur Konfiguration des Dienstes ermöglicht sind. Wie ersichtlich, kann der Dienst gegebenenfalls zur Nutzung durch eine Arbeitsgruppe konfiguriert werden. Ferner kann vorgegeben werden, in welchen Abständen eine Ermittlung der Position erfolgen soll. Gegebenenfalls ist es auch denkbar, dass die Art und Weise der Positionsbestimmung auswählbar ist, wobei beispielsweise für einen mit einem Mobilfunkgerät zusammenwirkenden Dienst zur Positionsbestimmung eine Bestimmung unter Nutzung von GPS-Koordinaten oder von Zell-Informationen des entsprechenden von dem Mobilfunkgerät genutzten Mobilfunknetzes möglich ist.

Schließlich ist in der Fig. 2 noch ein Messaging-Dienst in Form einer entsprechenden Box 3' visualisiert. Auch bei diesem Dienst ist eine die Konfiguration des Dienstes ermöglichende Seite aktiviert, wobei der entsprechende Reiter die Überschrift "Medium" trägt. Hierdurch wird verdeutlicht, dass in dem Konfigurationsmenü festgelegt werden kann, über welches Medium eine über den Dienst auszugebende Nachricht ausgegeben wird. Hierfür kommen beispielsweise das Mobilfunknetz beziehungsweise SMS oder, wie im Beispiel gezeigt, die Ausgabe via E-Mail in Betracht. In der die genannten Dienste repräsentierenden Box 3' sind demnach mehrere alternativ verwendbare Dienste zu einer Gruppe zusammengefasst, welche für die Administration als ein Dienst angesehen wird. Die Zusammenfassung der Dienste kann dabei ausschließlich im Zusammenhang mit der Visualisierung sie abbildender Datenobjekte, aber gegebenenfalls auch dadurch erfolgen, dass in der Datenbank 1 ein die Dienste bereits zusammenfassend beschreibendes Datenobjekt hinterlegt ist.

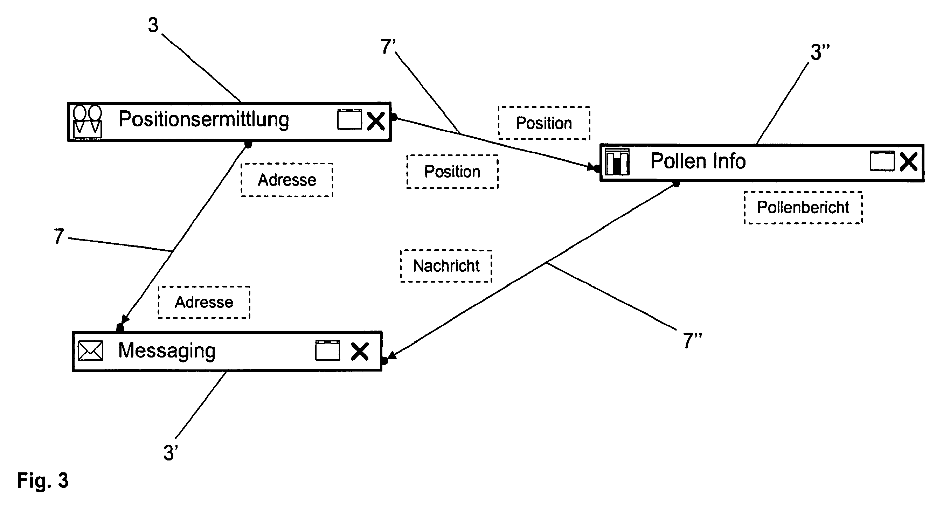

Die Fig. 3 zeigt ein mögliches Beispiel der Kombination der in der Fig. 2 dargestellten Dienste. Um eine bessere Übersicht zu ermöglichen, sind in dieser Darstellung die die Dienste symbolisierenden Boxen 3, 3', 3" mit einer dafür in der rechten oberen Ecke der Boxen 3, 3', 3" beziehungsweise Fenster vorgesehenen Schaltfläche minimiert worden. Die an den Rändern der Boxen 3, 3', 3" vorzugsweise mittels der schon erwähnten Maus entlang bewegbaren und somit an den Boxen 3, 3', 3" frei platzierbaren Ports 4, 4', 4" der Dienste, nämlich ihre Eingänge 5, 5', 5" und Ausgänge 6, 6', 6" sind entsprechend miteinander verbunden worden. Gemäß dem in der Figur gezeigten Beispiel wird demnach ein Dienst zur Positionsbestimmung dazu genutzt, um wiederholt Daten zur aktuellen Position eines mit Mitteln zur Positionsbestimmung (GPS-Empfänger oder hinsichtlich seiner Position in einem zellularen Netz ortbares Mobilfunkendgerät) ausgestatteten Nutzers des Verfahrens zu ermitteln. Der Dienst zur Positionsbestimmung ist dabei beispielsweise so konfiguriert, dass die ermittelten Positionsdaten in zeitlich festen Abständen oder bei einer signifikanten Änderung der Position des vorgenannten Nutzers an einen Dienst zur Information über die Pollenbelastung übergeben werden. Gegebenenfalls können diese Positionsdaten, wie aus dem Beispiel ersichtlich, außerdem unmittelbar an einen Messaging-Dienst zur Übermittlung an einen Dienstnutzer übergeben werden.

Durch den Polleninformationsdienst wird für die durch den Dienst zur Positionsbestimmung übergebene Position jeweils die aktuelle Pollenbelastungssituation ermittelt und eine Information dazu entsprechend der zwischen diesem Dienst und dem Messaging-Dienst gegebenen Verbindung 7" über den Messaging-Dienst ausgegeben. Gemäß der Fig. 2 erfolgt die Ausgabe der Information an eine E-Mail-Adresse. Dies soll jedoch nur der grundsätzlichen Veranschaulichung der durch das Verfahren gegebenen Möglichkeiten dienen. Praxisgerecht wäre es in jedem Falle auch, die entsprechende Information per SMS auf das Handy der Person zu übermitteln, deren Position jeweils durch den Dienst zur Positionsbestimmung bestimmt wird.

### Liste der Bezugszeichen

- 1: Datenbank
- 2: Display
- 3, 3', 3": Box
- 4, 4', 4": Port
- 5, 5', 5": Eingang
- 6, 6', 6": Ausgang
- 7, 7', 7": Linie, Verbindung
- 8: Umsetzungskomponente
- 9: Ausführungsebene
- 10 -14: Gateway
- 15 - 18: Endgerät zur Dienstnutzung

## Patentansprüche

1. Verfahren zur Bereitstellung von in einer telekommunikativen Netzinfrastruktur nutzbaren Diensten, mittels welchem zur Verfügung gestellte Dienste von deren Nutzern durch eine computergestützte Administration auswählbar und die ausgewählten Dienste für die Nutzung miteinander kombinierbar sind, wobei
a. alle auswählbaren Dienste auf ein ihre technische Spezifikation beschreibendes Datenobjekt abgebildet werden,
b. jedes einen Dienst abbildende Datenobjekt in einer auf einem oder mehreren Servern der Netzinfrastruktur gehaltenen Datenbank (1) abgelegt wird,
c. ein mittels eines zur Administration benutzten in die Netzinfrastruktur einbezogenen Endgeräts durch Zugriff auf die Datenbank ausgewählter Dienst von einer mittels dieses Endgeräts bedienbaren Administrationssoftware an einem Display (2) des Endgeräts als eine auf dem Display freipositionierbare graphische Box (3, 3', 3") visualisiert wird,
d. jede ein Datenobjekt repräsentierende Box (3, 3', 3") zumindest eine den Dienst bezeichnende Überschrift aufweist sowie eine textuelle Kurzbeschreibung des Dienstes enthält und an jeder Box mindest ein einen Eingang (5, 5', 5") oder einen Ausgang (6, 6', 6") des Dienstes repräsentierender Port (4, 4', 4") symbolisiert ist, wobei die Ports (4, 4', 4") entsprechend den von ihnen abgebildeten physikalischen Typen der Datenports der Dienste in unterschiedlicher Weise visualisiert werden,
e. zur Verknüpfung von Diensten die Ports (4, 4', 4") der sie repräsentierenden Boxen (3, 3', 3"), durch Linien (7, 7', 7") visualisiert, mittels der Administrationssoftware verbindbar sind, wobei Dienste untereinander nur entsprechend sich aus ihren in den Datenobjekten abgebildeten Spezifikationen ergebenden und zumindest die Typen ihrer Datenports berücksichtigenden Vorgaben miteinander verbindbar sind,
f. der die Verknüpfung der Dienste darstellende Graph aus den Boxen (3, 3', 3") und den ihre Ports (4, 4', 4") verbindenden Linien (7, 7', 7") nach dem Abschluss des Administrationsvorgangs durch eine Umsetzungskomponente (8), nämlich eine durch soft- und hardwarebasierte Einheiten der Netzinfrastruktur realisierte Instanz, in eine maschinenlesbare Form umgesetzt wird, welche die Art und Weise des Ablaufs der ausgewählten Dienste und ihres Zusammenwirkens bei ihrer Nutzung bestimmende technische Parameter enthält, wobei die Linien (7, 7', 7") des Graphen einen leitungs- oder paketvermittelten Datenaustausch zwischen den Diensten symbolisieren und der jeweilige Verbindungstyp durch den physikalischen Typ der dabei miteinander verbundenen Datenports der Dienste bestimmt wird,
g. die vorgenannten, die Art und Weise des Ablaufs der ausgewählten Dienste und ihres Zusammenwirkens bei ihrer Nutzung bestimmenden technischen Parameter in zur Dienststeuerung ausgebildeten Einheiten der Netzinfrastruktur in Zuordnung zu dem sie auswählenden Nutzer oder einer Nutzergruppe abgelegt werden,
h. die in den Einheiten zur Dienststeuerung abgelegten technischen Parameter von diesen Einheiten zur Laufzeit der Dienste auf einer die auszuführenden Instanzen der Dienste umfassenden Ausführungsebene (9) in interpretativer Weise in Signale umgesetzt werden, welche die Dienste auf physikalischer Ebene steuern.

2. Verfahren nach Anspruch 1, **dadurch gekennzeichnet, dass** die Visualisierung der die Dienste abbildenden Datenobjekte und ihrer bei der Administration erfolgenden Verknüpfungen mit Hilfe einer browser-basierten graphischen Benutzeroberfläche der Administrationssoftware erfolgt.

3. Verfahren nach Anspruch 2, **dadurch gekennzeichnet, dass** die Administrationssoftware webbasiert ist.

4. Verfahren nach einem der Ansprüche 1 bis 3, **dadurch gekennzeichnet, dass** die Boxen (3, 3', 3") zur Visualisierung der die Dienste abbildenden Datenobjekte editierbar sind, so dass in ihnen dargestellte Elemente eines einen Dienst abbildenden Datenobjekts zur Konfiguration einer auszuführenden Instanz des betreffenden Dienstes mittels des zur Administration verwendeten Endgeräts tastatur- oder menügesteuert veränderbar sind.

5. Verfahren nach Anspruch 4, **dadurch gekennzeichnet, dass** innerhalb einer einen Dienst repräsentierenden Box (3, 3', 3") konfigurierbare Parameter bei der Auswahl des betreffenden Dienstes mit durch den Dienstanbieter oder durch eine die Administrationssoftware nutzende Person bei einem früheren Administrationsvorgang bestimmten Werten vorbelegt sind.

6. Verfahren nach einem der Ansprüche 1 bis 5, **dadurch gekennzeichnet, dass** die Datenbank Datenobjekte enthält, welche eine Gruppe alternativ verwendbarer Dienste zusammenfassend als einen Dienst abbilden.

7. Verfahren nach einem der Ansprüche 1 bis 6, **dadurch gekennzeichnet, dass** die Datenbank Datenobjekte zur Abbildung von Grunddiensten enthält, deren sie visualisierende Boxen (3, 3', 3") von einer die Administrationssoftware nutzenden Person mit einem über die Netzinfrastruktur mit Hilfe anderer Dienste zu übertragenden Content befüllbar sind.

8. Verfahren nach einem der Ansprüche 1 bis 7, **dadurch gekennzeichnet, dass** physikalisch unterschiedliche Typen von Datenports der Dienste an den die Dienste repräsentierenden Boxen (3, 3', 3") durch verschiedene geometrische Formen und/oder in verschieden Farben dargestellt werden.

9. Verfahren nach einem der Ansprüche 1 bis 8, **dadurch gekennzeichnet, dass** die Eingänge (5, 5', 5") oder Ausgänge (6, 6', 6") von Diensten symbolisierenden Ports (4, 4', 4") der Boxen (3, 3', 3") mit einer kurzen textlichen Erläuterung versehen sind

10. Verfahren nach einem der Ansprüche 1 bis 9, **dadurch gekennzeichnet, dass** ein Port (4, 4', 4") eines Dienstes zur Verbindung mit dem Port eines anderen Dienstes durch Anklicken aktiviert und seine Aktivierung durch eine graphische Hervorhebung visualisiert wird.

11. Verfahren nach einem der Ansprüche 1 bis 7, **dadurch gekennzeichnet, dass** die den Graph mit den die Dienste repräsentierenden Boxen (3, 3', 3") und den, den leitungs- oder paketvermittelten Datenaustausch zwischen den Diensten repräsentierenden Linien (7, 7', 7") visualisierende graphische Benutzeroberfläche der Administrationssoftware kontextsensitive Hilfemenüs umfasst.

## Claims

1. A method for providing services usable in a telecommunication network infrastructure, by which the provided services can be selected by their users via a computer-assisted administration and the selected services can be combined with each other for use, wherein
a. all selectable services are mapped onto a data object describing their respective technical specification,
b. each data object representing a service is stored in a database (1) maintained on one or more servers of the network infrastructure,
c. a service selected by accessing the database, by means of a terminal used for administration and integrated into the network infrastructure, is visualised, by means of an administration software operable by this terminal, on a display (2) of the terminal as a graphical box (3, 3', 3") freely positionable on the display,
d. each box (3, 3', 3") representing a data object contains at least a heading indicating the service as well as a short text description of the service, and on each box at least one port (4, 4', 4") representing an input (5, 5', 5") or an output (6, 6', 6") of the service is shown, wherein the ports (4, 4', 4") are visualised differently according to the physical types of the data ports of the services represented thereby,
e. for the linking of services, the ports (4, 4', 4") of the boxes (3, 3', 3") representing them are connectable, visualised by lines (7, 7', 7"), by means of the administration software, wherein services can be connected to each other only according to the conditions which emerge from the specifications represented in their data objects and take into account at least the types of their data ports,
f. the graph representing the linking of the services, which consist of the boxes (3, 3', 3") and the lines (7, 7', 7") connecting their ports (4, 4', 4"), is converted, after completion of the administration procedure, by an implementation unit (8), i.e. by an instance realised by software-and hardware-based units of the network infrastructure, into a machine-readable form containing technical parameters determining the way the selected services are performed and cooperate during use, wherein the lines (7, 7', 7") of the graph represent a line or packet switched data exchange between the services and the respective connection type is determinded by the physical type of the data ports of the services connected therethrough,
g. said technical parameters determining the way the selected services are performed and cooperate during use are stored, in correlation with the user or a user group selecting them, in the units of the network infrastructure configured for controlling the services correlation with the user or a user group selecting them,
h. at runtime of the services, the technical parameters stored in the service controlling units are converted by said units, in an interpretative manner, into signals which control the services on a physical layer, on an execution layer (9) comprising the instances of the services to be executed.

2. The method according to claim 1, **characterised in that** the visualisation of the data objects representing the services and their linking during administration is effected by means of a browser-based graphic user interface of the administration software.

3. The method according to claim 2, **characterised in that** the administration software is web-based.

4. The method according to any one of claims 1 to 3, **characterised in that** the boxes (3, 3', 3") can be edited for the visualisation of the data objects representing the services, in a way that elements of a data object which are shown therein and represent a service can be changed, in a keyboard or menu-controlled manner, for the configuration of an executable instance of the respective service by means of the terminal used for administration.

5. The method according to claim 4, **characterised in that** within a box (3, 3', 3") representing a service, during the selection of the respective service, configurable parameters are by default set with values determined by the service provider or the person using the administration software during a previous administration procedure.

6. The method according to any one of claims 1 to 5, **characterised in that** the database contains data objects which collectively represent a group of alternatively usable services as one service.

7. The method according to any one of claims 1 to 6, **characterised in that** the database contains data objects for the representation of basic services, wherein the boxes (3, 3', 3") visualising them can be filled, by a person using the administration software, with content to be transmitted via the network infrastructure by means of other services.

8. The method according to any one of claims 1 to 7, **characterised in that** physically different types of data ports of the services are shown by different geometrical forms and/or different colours on the boxes (3, 3', 3") representing the services.

9. The method according to any one of claims 1 to 8, **characterised in that** the ports (4, 4', 4") of the boxes (3, 3', 3") which represent inputs (5, 5', 5") or outputs (6, 6', 6") of services are provided with a short text description.

10. The method according to any one of claims 1 to 9, **characterised in that** a port (4, 4', 4") of a service is activated by clicking to connect it with the port of another service, and its activation is visualised by graphically highlighting it.

11. The method according to any one of claims 1 to 7, **characterised in that** the graphical user interface of the administration software visualising the graph, with the boxes (3, 3', 3") representing the services and the lines (7, 7', 7") representing the line or packet-switched data exchange between the services, comprises context-sensitive help menus.

## Revendications

1. Procédé de fourniture de services utilisables dans une infrastructure de réseau de télécommunication, permettant aux utilisateurs des services de sélectionner, par une administration assistée par ordinateur, des services fournis et de combiner les services sélectionnés les uns aux autres en vue de leur utilisation, dans lequel
a. tous les services pouvant être sélectionnés sont mappés sur un objet de données décrivant leur spécification technique,
b. chaque objet de données mappant un service est stocké dans une base de données (1) tenue dans un ou plusieurs serveurs de l'infrastructure de réseau,
c. un service sélectionné par accès à un terminal utilisé pour l'administration et intégré dans l'infrastructure de réseau est visualisé, au moyen d'un logiciel d'administration apte à être utilisé par l'intermédiaire dudit terminal, sous la forme d'une boite graphique (3, 3', 3") librement positionnable sur l'écran (2) du terminal,
d. chaque boîte (3, 3', 3") représentant un objet de données comporte au moins un titre désignant le service ainsi qu'un court descriptif textuel du service, et au moins un port (4, 4', 4") représentant une entrée (5, 5', 5") ou une sortie (6, 6', 6") du service est symbolisé sur chaque boîte, les ports (4, 4', 4") étant visualisés de manière différente en fonction des types physiques des ports de données des services qu'ils mappent,
e. pour permettre la combinaison de services, les ports (4, 4', 4") des boîtes (3, 3', 3") qui les représentent, visualisés par des lignes (7, 7', 7"), peuvent être reliés au moyen du logiciel d'administration, les services ne pouvant être reliés entre eux qu'en fonction des éléments prédéfinis à partir de leurs spécifications mappées sur les objets de données et prenant en compte au moins les types de leurs ports de données,
f. à la fin de la procédure d'administration, le graphe représentant la combinaison des services dans les boîtes (3, 3', 3") et les lignes (7, 7', 7") reliant leurs ports (4, 4', 4") est converti, par un unité d'implementation (8), c'est-à-dire une instance realisée par des unités logicielles et matérielles de l'infrastructure de réseau, en une forme lisible par ordinateur qui contient des paramètres techniques qui permettent de déterminer de quelle manière se déroulent les services sélectionnés et de quelle manière ils coopèrent pendant leur utilisation, les lignes (7, 7', 7") du graphe symbolisant un échange de données avec commutation de circuits ou de paquets entre les services et le type de connexion étant respectivement déterminé par le type physique des ports de données des services reliés,
g. lesdits paramètres techniques déterminant de quelle manière se déroulent les services sélectionnés et de quelle manière ils coopèrent pendant leur utilisation sont stockés dans les unités de l'infrastructure de réseau configurés pour commander les services, avec affectation à l'utilisateur ou à un groupe d'utilisateurs qui les choisit,
h. lors de l'exécution des services, les paramètres techniques stockés dans les unités qui commandent les services sont convertis par lesdits unités, d'une manière interprétative, au niveau d'une couche d'exécution (9) comprenant les instances des services à exécuter, dans des signals contrôlant les services au niveau de la couche physique.

2. Procédé selon la revendication 1, **caractérisé en ce que** la visualisation des objets de données mappant les services et de leurs combinaisons opérées par l'administration s'effectue à l'aide d'une interface utilisateur graphique du logiciel d'administration basée sur le navigateur.

3. Procédé selon la revendication 2, **caractérisé en ce que** le logiciel d'administration est basé sur le web.

4. Procédé selon l'une des revendications 1 à 3, **caractérisé en ce que** pour visualiser les objets de données mappant les services, les boîtes (3, 3', 3") peuvent être éditées de manière à permettre la modification, via le clavier ou le menu, des éléments qu'elles affichent d'un objet de données représentant un service pour permettre la configuration d'une instance à exécuter du service concerné moyennant le terminal utilisé pour l'administration.

5. Procédé selon la revendication 4, **caractérisé en ce que**, au sein d'une boîte (3, 3', 3") représentant un service, des paramètres configurables sont renseignés, pour le choix du service concerné, avec des valeurs déterminées par le fournisseur de services ou par une personne utilisant le logiciel d'administration lors d'une procédure d'administration précédente.

6. Procédé selon l'une des revendications 1 à 5, **caractérisé en ce que** la base de données contient des objets de données qui mappent un groupe de services utilisables de manière alternative en un seul service.

7. Procédé selon l'une des revendications 1 à 6, **caractérisé en ce que** la base de données contient des objets de données pour le mappage de services de base dont les boîtes (3, 3', 3") qui les visualisent peuvent être remplies par une personne utilisant le logiciel d'administration avec des contenus à transmettre à l'aide d'autres services par l'intermédiaire de l'infrastructure de réseau.

8. Procédé selon l'une des revendications 1 à 7, **caractérisé en ce que** des types physiquement différents de ports de données des services sont représentés par des formes géométriques différentes et/ou dans des couleurs différentes sur les boîtes (3, 3', 3") représentant les services.

9. Procédé selon l'une des revendications 1 à 8, **caractérisé en ce que** les ports (4, 4', 4") des boîtes (3, 3', 3") symbolisant les entrées (5, 5', 5") ou les sorties (6, 6', 6") des services sont munies d'une courte description textuelle.

10. Procédé selon l'une des revendications 1 à 9, **caractérisé en ce qu'**un port (4, 4', 4") d'un service est activé par un clic pour être connecté au port d'un autre service et **en ce que** son activation est visualisée par une mise en relief graphique.

11. Procédé selon l'une des revendications 1 à 7, **caractérisé en ce que** l'interface utilisateur graphique du logiciel d'administration visualisant le graphe avec les boîtes (3, 3',3") représentant les services et les lignes (7, 7', 7") représentant l'échange de données commuté par circuits ou par paquets entre les services comprend des menus d'aide sensibles au contexte.
